Europäisches Patentamt

European Patent Office

Office européen des brevets

(19)

(11) EP 0 782 603 B1

(12) FASCICULE DE BREVET EUROPEEN

(45) Date de publication et mention
de la délivrance du brevet:
**05.04.2000 Bulletin 2000/14**

(51) Int Cl.⁷: **C09K 19/38**, C08B 1/00,
D01F 2/02

(21) Numéro de dépôt: 95930359.5

(22) Date de dépôt: **18.09.1995**

(86) Numéro de dépôt international:
**PCT/CH95/00206**

(87) Numéro de publication internationale:
**WO 96/09356 (28.03.1996 Gazette 1996/14)**

(54) **SOLUTIONS CRISTAL-LIQUIDE A BASE DE CELLULOSE ET D'AU MOINS UN ACIDE PHOSPHORIQUE**

FLÜSSIGKRISTALLLÖSUNGEN BASIEREND AUF ZELLULOSE UND WENIGSTENS EINER PHOSPHORSÄURE

LIQUID CRYSTAL SOLUTIONS BASED ON CELLULOSE AND AT LEAST ONE PHOSPHORIC ACID

(84) Etats contractants désignés:
**DE FR GB NL**

(30) Priorité: **19.09.1994 FR 9411404**

(43) Date de publication de la demande:
**09.07.1997 Bulletin 1997/28**

(73) Titulaire: **MICHELIN RECHERCHE ET TECHNIQUE S.A.**
**CH-1763 Granges-Paccot (CH)**

(72) Inventeurs:
• **HUSTON, Rima**
**CH-8057 Zurich (CH)**
• **MERALDI, Jean-Paul**
**CH-8059 Zurich (CH)**
• **URSO, Fabio**
**F-63000 Clermont-Ferrand (FR)**
• **ESNAULT, Philippe**
**F-63118 Cébazat (FR)**

(74) Mandataire: **Ribière, Joel et al**
**Michelin & Cie**
**Service SGD/LG/PI-LAD**
**63040 Clermont-Ferrand Cedex 09 (FR)**

(56) Documents cités:
**WO-A-85/05115       DE-C- 714 434**
**FR-A- 2 465 763       GB-A- 263 810**
**NL-C- 54 859**

• **DATABASE WPI Week 8849, Derwent Publications Ltd., London, GB; AN 88-351892 & SU,A,1 397 456 (SYNTH. RESIN) 23 Mai 1988**
• **DATABASE WPI Week 8822, Derwent Publications Ltd., London, GB; AN 88-153465 & SU,A,1 348 396 (PHYS-CHEM PROBLEMS) 30 Octobre 1987**
• **PATENT ABSTRACTS OF JAPAN vol. 17, no. 42 (C-1020) 26 Janvier 1993 & JP,A,04 258 648 (ASAHI CHEM IND.) 14 Septembre 1992 & DATABASE WPI Week 9243, Derwent Publications Ltd., London, GB; AN 92-354804 & JP,A,4 258 648 (ASAHI CHEM IND) 14 Septembre 1992**

Printed by Jouve, 75001 PARIS (FR)

## Description

L'invention concerne la cellulose, les solutions cristal-liquide à base de cellulose, c'est-à-dire fortement concentrées en cellulose, ainsi que les produits filés en cellulose.

L'invention concerne plus particulièrement les solutions cristal-liquide à base de cellulose lorsqu'elles sont filables, c'est-à-dire les solutions susceptibles d'être filées pour donner des fibres ou des films à hautes propriétés mécaniques.

Il est connu depuis longtemps que la réalisation de solutions cristal-liquide est essentielle pour l'obtention de fibres à hautes propriétés mécaniques, comme l'ont montré notamment les demandes de brevet US-A-3 767 756 portant sur les fibres aramides, ou US-A-4 746 694 portant sur les fibres de polyesters aromatiques.

Des solutions cristal-liquide à base de dérivés cellulosiques, ainsi que les fibres ou films qui peuvent être obtenus à partir de ces solutions, ont également été décrits dans certains brevets ou demandes de brevets.

Les demandes de brevet US-A-4 370 168 et US-A-4 501 886 ont par exemple montré l'existence de solutions cristal-liquide filables à base d'éthers ou d'acétate de cellulose dissous dans des acides minéraux, solutions qui permettent d'obtenir des fibres de haute ténacité et de haut module. Les procédés employés sont cependant limités dans leur application par les inconvénients suivants:

- nécessité de préparer séparément les dérivés, puis les solutions de ces dérivés;
- après filage des solutions de dérivés, nécessité de régénérer les fibres, quand cela est possible, pour obtenir des fibres de cellulose ;
- pas de régénération possible dans le cas des éthers ;
- une régénération très longue (plusieurs heures), empêchant une opération en ligne avec le filage, dans le cas des acétates.

Le brevet EP-B-179 822 et le brevet équivalent US-A-4 839 113 décrivent l'obtention de solutions de filage cristal-liquide à base de formiate de cellulose, par réaction de la cellulose avec de l'acide formique et de l'acide phosphorique. Ils décrivent également des fibres de cellulose régénérée à propriétés mécaniques élevées, obtenues par régénération de fibres de formiate de cellulose. Les procédés utilisés présentent de nombreux avantages. En particulier, l'utilisation du formiate comme dérivé autorise une dérivation in situ (formylation et dissolution de la cellulose dans le même mélange solvant), et une régénération très rapide, en ligne avec le filage. Ces procédés sont néanmoins pénalisés par le recyclage d'un mélange d'acides ainsi que des produits de la régénération.

D'autre part, de nombreuses tentatives ont été faites pour obtenir des solutions cristal-liquide de cellulose par dissolution directe de la cellulose (pas de dérivation, et donc suppression de la régénération).

On a par exemple proposé de dissoudre la cellulose dans un mélange de N,N-diméthylacétamide (DMAC) et de chlorure de lithium (LiCl), comme décrit par exemple dans US-A-4 278 790. Il n'est pas possible avec un tel système d'obtenir des solutions suffisamment concentrées, et leur anisotropie est faible, ce qui ne permet pas d'obtenir des fibres ayant des propriétés mécaniques élevées (voir par ex. J. Polym. Sci., Polym. Phys. Ed., 27 (1989), 1477 & J. Appl. Polym. Sci., 51 (1994), 583).

On a proposé également de dissoudre directement la cellulose dans des amines tertiaires N-oxydes, notamment le N-oxyde de N-méthylmorpholine, comme décrit par exemple dans US-A-4 416 698. Ces solvants sont mal adaptés à la mise en oeuvre de solutions fortement concentrées, condition de concentration par ailleurs nécessaire à l'obtention d'une phase cristal-liquide, car la température d'utilisation de ces solutions est proche de la température de dégradation du solvant.

La demande de brevet japonais publiée sous le numéro 4-258 648 décrit également des solutions obtenues par dissolution directe de cellulose, certaines de ces solutions pouvant présenter une anisotropie optique sous certaines conditions. Cependant, le mélange solvant proposé est constitué d'au moins deux acides, notamment l'acide sulfurique et l'acide phosphorique. La présence de deux acides peut se traduire par des complications sérieuses au recyclage. En outre, l'utilisation de l'acide sulfurique risque de conduire à une sulfonation de la cellulose, ou à une dégradation importante de celle-ci, et donc à un filage plus difficile. Le risque de corrosion rapide des équipements existe également.

De manière tout à fait inattendue, la demanderesse a trouvé lors de ses recherches qu'un système solvant très simple, ne faisant appel qu'à un seul acide inorganique, ou à un seul type d'acide inorganique, permettait la dissolution directe de la cellulose et l'obtention d'une solution cristal-liquide.

La solution cristal-liquide de l'invention, comportant de la cellulose dissoute dans un agent solvant, est caractérisée par les points suivants:

- elle contient plus de 10 % en poids de cellulose ;
- elle est optiquement anisotrope à température ambiante et au repos;
- l'agent solvant contient plus de 85 % en poids d'au moins un acide phosphorique, cet acide phosphorique ou l'ensemble de ces acides phosphoriques répondant à la formule moyenne suivante:

$$[n(P_2O_5), p(H_2O)], \text{ avec: } 0,33 < (n/p) < 1,0 \ .$$

De manière préférentielle, le rapport molaire de $P_2O_5$ et d'eau, noté ci-dessus (n/p), vérifie la relation qui suit:

$$0,5 \leq (n/p) \leq 0,75 \ .$$

L'invention concerne également un procédé pour obtenir la solution précédemment définie. Il est caractérisé par les points suivants:

- on met de la cellulose au contact d'un agent solvant qui contient plus de 85 % en poids d'au moins un acide phosphorique, cet acide phosphorique ou l'ensemble de ces acides phosphoriques répondant à la formule moyenne suivante:

    $[n(P_2O_5), p(H_2O)]$, avec: $0,33 < (n/p) < 1,0$ ;
- on utilise une quantité de cellulose supérieure à 10 % en poids du mélange cellulose plus agent solvant ;
- on dissout directement cette cellulose par malaxage avec l'agent solvant.

De manière préférentielle, la solution cristal-liquide de l'invention est une solution filable.

L'invention concerne en outre un procédé pour obtenir des produits filés en cellulose, ainsi que ces produits filés eux-mêmes.

Le procédé de l'invention pour obtenir une fibre ou un film en cellulose comporte les étapes suivantes :

- on transforme la solution filable précédemment définie en un extrudat liquide ayant la forme d'une fibre ou d'un film ;
- on coagule ledit extrudat liquide dans un milieu coagulant ;
- on lave puis on sèche la fibre ou le film ainsi obtenus.

L'invention concerne d'autre part une fibre non régénérée de cellulose vérifiant au moins une des relations suivantes:

    Te > 70 cN/tex ; Mi > 1500 cN/tex,

Te étant sa ténacité, et Mi étant son module initial.

L'invention concerne également les produits suivants:

- les assemblages de renforcement, comme par exemple des câbles ou des retors, comportant chacun au moins un produit filé conforme à l'invention;
- les articles renforcés avec les produits filés conformes à l'invention, en particulier les articles renforcés chacun par au moins une fibre et/ou un film et/ou un assemblage de renforcement conformes à l'invention, ces articles étant par exemple des articles en caoutchouc ou en matières plastiques, par exemple des nappes, des courroies, des tuyaux, des enveloppes de pneumatiques.

L'invention sera aisément comprise à l'aide de la description et des exemples non limitatifs qui suivent.

## I. MESURES ET TESTS UTILISES

I.1. Remarques préliminaires

Dans la présente demande, on entend de manière connue :

- par "solution", une composition liquide homogène dans laquelle aucune particule solide n'est visible à l'oeil nu ;

- par "solution de filage", ou "solution filable", une solution prête à filer, c'est-à-dire pouvant être transférée directement vers une machine de filage pour y être immédiatement filée, sans autre transformation préalable que des opérations habituelles telles que dégazage ou filtration par exemple ;

- par "solution cristal-liquide", une solution optiquement anisotrope, c'est-à-dire capable de dépolariser la lumière ;

- par "solution au repos", une solution qui n'est soumise à aucune contrainte dynamique, en particulier à aucune contrainte de cisaillement;

- par "température ambiante", une température d'environ 20°C ;

- par "produit filé", tout produit obtenu par filage, c'est-à-dire par extrusion d'une solution de filage à travers une filière ou un trou, ce produit filé pouvant être par exemple une fibre multifilamentaire, une fibre monofilamentaire, un jonc de gros diamètre, ou un film ;

- par "fibre non régénérée de cellulose", une fibre de cellulose obtenue directement par filage d'une solution de cellulose, c'est-à-dire sans passer par les étapes successives de dérivation de la cellulose, de filage d'une solution de dérivé cellulosique, puis de régénération des fibres de dérivé cellulosique.

I.2. Degré de polymérisation de la cellulose

Le degré de polymérisation est noté DP. On mesure le DP de la cellulose de manière connue, cette cellulose étant sous forme de poudre, ou transformée préalablement en poudre.

On détermine tout d'abord la viscosité inhérente IV de la cellulose selon la norme suisse SNV 195 598 de 1970, mais à différentes concentrations qui varient entre 0,5 et 0,05 g/dl. La viscosité inhérente est définie par l'équation:

$$IV = (1/C) \times Ln(t/t_o)$$

dans laquelle C représente la concentration en cellulose sèche, "t" représente la durée d'écoulement de la solution diluée de polymère, $t_O$ représente la durée d'écoulement du solvant pur, dans un viscosimètre de type Ubbelhode, et Ln représente le logarithme népérien, les mesures étant réalisées à 20°C.

La viscosité intrinsèque [η] est ensuite déterminée par extrapolation à concentration nulle de la viscosité inhérente.

La masse moléculaire moyenne en poids $M_w$ est donnée par la relation de Mark-Houwink:

$$[\eta] = KM_w^{\alpha}$$

où les constantes K et $\alpha$ sont respectivement :
K = 5,31 x $10^{-4}$ ; $\alpha$ = 0,78, ces constantes correspondant au système de solvant utilisé pour la détermination de la viscosité inhérente. Ces valeurs sont données par L. Valtasaari dans le document Tappi 48, 627 (1965).

Le DP est finalement calculé selon la formule:

$$DP = (M_w)/162,$$

162 étant la masse moléculaire du motif élémentaire de la cellulose.

Lorsqu'il s'agit de déterminer le DP de la cellulose en solution, on doit isoler tout d'abord la cellulose de son solvant. On procède alors par coagulation de la solution, puis lavage complet pour extraction de l'acide, et enfin séchage. On mesure alors le DP comme décrit précédemment.

I.3. Propriétés optiques des solutions

L'isotropie ou l'anisotropie optique des solutions est déterminée en plaçant une goutte de solution à étudier entre polariseur et analyseur linéaires croisés d'un microscope optique de polarisation, puis en observant cette solution au repos et à température ambiante.

De manière connue, une solution optiquement anisotrope est une solution qui dépolarise la lumière, c'est-à-dire qui présente, ainsi placée entre polariseur et analyseur linéaires croisés, une transmission de la lumière (texture colorée).

Une solution optiquement isotrope est une solution qui, dans les mêmes conditions d'observation, ne présente pas la propriété de dépolarisation ci-dessus, le champ du microscope restant noir.

I.4. Propriétés mécaniques des produits filés

Les produits filés des exemples de réalisation qui suivent sont des fibres multifilamentaires, c'est-à-dire des fibres constituées d'un grand nombre de filaments élémentaires de faible diamètre (faible titre), encore appelées "filés".

Toutes les propriétés mécaniques ci-après sont mesurées sur des fibres ayant été soumises à un conditionnement préalable. Par "conditionnement préalable", on entend le stockage des fibres, avant mesure, selon la norme européenne DIN EN 20139 de septembre 1992 (utilisation d'une atmosphère standard: température de 20°C et hygrométrie de 65 %).

Le titre des fibres est déterminé sur au moins trois échantillons, chacun correspondant à une longueur de 50 m, par pesée de cette longueur de fibre. Le titre est donné en tex (poids en grammes de 1000 m de fibre).

Les propriétés mécaniques des fibres (ténacité, module initial et allongement à la rupture) sont mesurées de manière connue à l'aide d'une machine de traction (machines de type 1435 ou de type 1445 - société ZWICK GmbH & Co, Allemagne - correspondant aux normes d'Allemagne DIN 51220, 51221 et 51223). Sauf indication différente donnée de manière expresse, le mode opératoire employé pour ces mesures est celui décrit dans la norme d'Allemagne DIN 53834 de janvier 1979. Les fibres, après avoir reçu une faible torsion de protection préalable (angle d'hélice de 6° environ), subissent une traction sur une longueur initiale de 400 mm. Tous les résultats donnés sont une moyenne de 10 mesures.

La ténacité et le module initial sont indiqués en cN par tex (centinewton par tex). L'allongement à la rupture est indiqué en pourcentage. Le module initial est défini comme la pente de la partie linéaire de la courbe Force-Allongement, qui intervient juste après la prétension standard de 0,5 cN/tex.

**II. MISE EN OEUVRE DE L'INVENTION**

II.1. Matières premières

L'invention est mise en oeuvre à l'aide de cellulose et d'un agent solvant de la cellulose, préparé préalablement, apte à dissoudre rapidement cette cellulose par simple malaxage.

La cellulose peut être de la cellulose naturelle ou de la cellulose régénérée. Elle peut être utilisée sous différentes formes, par exemple sous forme de poudre ou de pulpe. Dans la présente demande, toutes les parties en poids de cellulose dans la solution, ou dans le mélange cellulose plus agent solvant, sont des valeurs brutes non corrigées de la teneur initiale en eau de la cellulose, cette teneur initiale étant sa teneur "naturelle", c'est-à-dire sans eau ajoutée. Cette teneur initiale en eau est de préférence inférieure à 8 % (en poids de cellulose).

L'agent solvant de la cellulose contient plus de 85 % en poids d'au moins un acide phosphorique, cet acide phosphorique ou l'ensemble de ces acides phosphoriques répondant à la formule moyenne suivante:

$$[n(P_2O_5), p(H_2O)],$$

avec, pour le rapport molaire (n/p), la relation suivante:

$$0,33 < (n/p) < 1,0 \ .$$

De manière préférentielle, on a la relation:

$$0,5 \le (n/p) \le 0,75.$$

De manière préférentielle, l'agent solvant est réalisé à partir de 0 jusqu'à moins de 15 % d'eau, et de plus de 85 % d'au moins un acide phosphorique (pourcentages en poids de l'agent solvant). De manière encore plus préférentielle, l'agent solvant est réalisé uniquement à partir de 0 jusqu'à moins de 15 % d'eau, et de plus de 85 % d'au moins un acide phosphorique (pourcentages en poids de l'agent solvant). L'acide phosphorique est notamment l'acide pyrophosphorique ou un acide polyphosphorique.

Dans tous les cas, l'agent solvant est utilisé sous une forme liquide pour la mise en contact avec la cellulose.

## II.2. Réalisation des solutions

Pour l'obtention des solutions conformes à l'invention, on met de la cellulose au contact de l'agent solvant précédemment défini.

Il est nécessaire d'utiliser une quantité de cellulose minimale pour l'obtention d'une solution cristal-liquide, supérieure à 10 % en poids du mélange cellulose plus agent solvant. De manière préférentielle, on utilise plus de 15 %, de manière encore plus préférentielle plus de 20 % en poids de cellulose.

Les solutions sont réalisées par tout moyen de malaxage connu. La cellulose et l'agent solvant sont généralement versés directement dans les moyens de malaxage, lesdits moyens devant être aptes à agiter, mélanger, malaxer correctement la cellulose et son agent solvant, jusqu'à l'obtention d'une solution. Le malaxage peut être conduit par exemple dans un mélangeur comportant des bras de malaxage en forme de Z, ou dans un mélangeur à vis en continu.

Ces moyens de malaxage sont généralement équipés d'un dispositif de chauffage et/ou de refroidissement permettant d'ajuster ou de contrôler la température du mélange. Pour la réalisation de solutions de filage notamment, on préfère refroidir la solution en cours de formation, afin de limiter la dégradation de la cellulose. De préférence, on maintient ainsi la température du mélange à une température inférieure à 20°C. De préférence, les moyens de malaxage sont également équipés d'un dispositif d'évacuation sous vide et d'une vis d'extrusion, afin de pouvoir dégazer la solution avant son transfert vers une unité de filage, lorsqu'il s'agit d'une solution de filage.

Les moyens de malaxage peuvent aussi consister simplement en des petits réacteurs connus de laboratoire, ces réacteurs étant équipés d'une double enveloppe pour refroidissement, et d'un agitateur mécanique. Ceci est notamment préférable pour des essais à petite échelle, par exemple pour des essais préalables d'optimisation avant réalisation de solutions pour filage. La réalisation de solutions conformes à l'invention peut se faire également à très petite échelle (quelques grammes de solution par exemple), en mélangeant "à la main", à l'aide d'une spatule, la cellulose et l'agent solvant dans un petit récipient de laboratoire du type becher.

La durée de malaxage nécessaire est bien sûr fonction des moyens employés et de la composition de la solution, en particulier de sa concentration en cellulose. Elle peut varier par exemple de quelques dizaines de minutes (par exemple 30 minutes à 1 heure pour une solution de filage préparée dans un gros mélangeur), jusqu'à quelques heures, par exemple pour des essais de laboratoire.

Après lecture de la description et des exemples de réalisation qui suivent, l'homme du métier saura définir, selon les conditions particulières de réalisation, les durées de malaxage nécessaires.

## II.3. Caractéristiques des solutions

Le mélangé de cellulose et d'agent solvant ainsi obtenu est tout d'abord contrôlé pour vérifier qu'il s'agit bien d'une solution (absence de particules solides visibles à l'oeil nu). Si tel est le cas, un échantillon de solution est alors examiné au microscope de polarisation afin de déterminer ses propriétés optiques.

Les solutions cristal-liquide de l'invention sont des liquides plus ou moins visqueux. Elles sont optiquement anisotropes au repos et à température ambiante. Il est à noter qu'aucune contrainte dynamique, en particulier aucune contrainte de cisaillement, ni réduction de température par rapport à la température ambiante, ne doivent être appliquées à ces solutions pour mettre en évidence leur anisotropie optique. Les solutions de l'invention restent d'ailleurs cristal-liquide à des températures qui sont généralement nettement supérieures à la température ambiante, par exemple pouvant dépasser 30°C ou plus.

De manière préférentielle, les solutions de l'invention ont une concentration en cellulose supérieure à 15 % en poids, plus préférentiellement supérieure à 20 % en poids.

Les solutions cristal-liquide de l'invention sont de préférence des solutions filables, pouvant être filées comme indiqué dans le paragraphe qui suit.

## II.4. Filage des solutions

Ce paragraphe concerne les solutions préférentielles de l'invention, c'est-à-dire les solutions filables.

Après avoir été désaérée, par exemple directement dans les moyens de malaxage, la solution est alors transférée, par exemple à l'aide d'une vis d'extrusion, dans un réservoir muni d'un piston. Le vide est maintenu pendant cette étape. La solution est alors stockée de préférence à une température négative (par exemple entre 0°C et -10°C) pour éviter une dégradation. On peut ainsi stocker la solution, à basse température, pendant plusieurs jours, ou au contraire la filer immédiatement. De manière préférentielle, le filage est réalisé en ligne et en continu avec l'étape de fabrication de la solution.

Au moment du filage, la solution est extrudée du réservoir à piston pour remplir une pompe d'extraction qui, à son tour, pousse la solution successivement à travers un filtre fin à cartouche, puis le bloc-de filage, jusque dans la pompe de filature. A partir de là, la solution est alors extrudée à travers une filière constituée d'au moins un capillaire, ou d'au moins une fente. La solution est ainsi transformée en un extrudat liquide, constitué d'au moins une veine liquide, ayant la forme d'une fibre ou d'un film. La température de la solution et sa vitesse de passage dans le capillaire ou la fente de la filière sont, par convention, appelées température de filage et vitesse de filière, respectivement.

De manière connue, c'est dans un bain de coagulation que la fibre ou le film en cellulose se forment, par précipitation de la cellulose (séparation de son agent solvant) sous l'action d'un liquide coagulant. Ce liquide, appelé ci-après milieu coagulant, est de préférence à base d'alcool ou de cétone, de manière encore plus préférentielle à base de méthanol ou d'acétone.

En sortie du bain de coagulation, le produit filé est repris sur un dispositif d'entraînement, par exemple sur des cylindres motorisés. La vitesse du produit filé, sur ce dispositif d'entraînement, est par convention appelée vitesse de filage. Le rapport entre cette vitesse de filage et la vitesse de filière définit ce que l'on appelle couramment le facteur d'étirage au filage, noté en abrégé FEF.

On lave ensuite, de préférence à l'eau, par passage en continu du produit filé dans des bains ou des cabines de lavage, pour éliminer l'agent solvant résiduel. Le produit filé ainsi lavé est ensuite séché par tout moyen connu, par exemple sur des rouleaux électriques chauffants.

De préférence, les solutions filables conformes à l'invention sont filées avec une filière non immergée dans le milieu coagulant, selon la technique de filage dite avec couche non coagulante ("dry-jet-wet spinning"), comme décrit par exemple dans les brevets EP-B-179 822 et US-A-4 839 113. Selon cette technique, la filière est disposée horizontalement à quelques millimètres ou quelques centimètres au dessus du bain de coagulation. C'est à la traversée de cette couche non coagulante, en général une couche d'air ("air-gap"), que chaque veine liquide sortant de la filière est étirée (FEF > 1) avant la coagulation, de manière à orienter au mieux les molécules de polymère dans l'écoulement, et à préparer ainsi les propriétés mécaniques du produit fini. Il faut noter que des couches non coagulantes autres que des couches d'air pourraient être utilisées.

Les fibres de cellulose de l'invention, caractérisées en ce qu'elles sont des fibres non régénérées, vérifient de préférence au moins une des relations suivantes:

Te > 70 ; Mi > 1500, Te étant leur ténacité en cN/tex, et Mi étant leur module initial en cN/tex.

De manière encore plus préférentielle, elles vérifient au moins une des relations suivantes:

Te > 90 ; Mi > 2500.

## III. EXEMPLES DE REALISATION

Les essais décrits ci-après peuvent être soit des essais conformes à l'invention, soit des essais non conformes à l'invention. Dans tous ces essais, on utilise de la cellulose en poudre (société Procter & Gamble), dont le DP est voisin de 500 et dont la teneur initiale en eau est de 6 %, et l'eau utilisée pour l'agent solvant est de l'eau déminéralisée.

Dans tous ces essais, on utilise d'autre part soit de l'acide pyrophosphorique, soit un acide polyphosphorique.

L'acide pyrophosphorique ($H_4P_2O_7$) utilisé ici est un acide de pureté égale à 95 % environ, commercialisé par la société Riedel-de-Haën. Le rapport molaire (n/p) correspondant à cet acide phosphorique est de 0,5.

L'acide polyphosphorique utilisé ici, de la société Fluka, est un acide polyphosphorique à 85 %, i.e. dont le titre est de 85 % en poids de $P_2O_5$. Le rapport molaire (n/p) correspondant est égal à 0,75, sa composition étant la suivante (% en poids):

- environ 60 % de trimère $H_5P_3O_{10}$;
- environ 15 % d'acide pyrophosphorique $H_4P_2O_7$;
- environ 10 % de mésomère $(HPO_3)_6$;
- environ 15 % d'acide polymétaphosphorique $(HPO_3)_x$.

### III.1. Essai A

Cet essai décrit un exemple conforme à l'invention dans lequel on réalise une solution par dissolution directe de cellulose dans un mélange d'acide polyphosphorique et d'eau.

6,9 g d'acide polyphosphorique (87 % en poids de mélange) et 1,0 g d'eau (13 % en poids de mélange) sont tout d'abord mélangés dans un becher, puis laissés quelques secondes à température ambiante, pour refroidissement. On ajoute ensuite 2,1 g de cellulose et on malaxe le tout, à l'aide d'une spatule, pendant 10 minutes à température ambiante (20°C).

On obtient ainsi une solution visqueuse (solution S1), contenant 21 % en poids de cellulose. Contrôlée au microscope optique de polarisation, à température ambiante et au repos, cette solution montre une forte anisotropie optique. En outre, un test rapide, dans lequel on essaie d'étirer une goutte de solution à l'aide d'une pointe de spatule, montre que cette solution est apte à donner des fils. Ceci indique qu'une telle solution, préparée bien sûr en quantité suffisante, a de bonnes chances d'être une solution filable.

### III.2. Essai B

Cet essai décrit un exemple conforme à l'invention dans lequel on réalise une solution par dissolution directe de cellulose dans l'acide pyrophosphorique.
L'acide pyrophosphorique est chauffé à 60°C pour le rendre liquide, puis ensuite refroidi à température ambiante. Il est alors utilisé tout de suite sous cette forme liquide. On met ainsi en contact 7,5 g d'acide et 2,5 g de cellulose, puis on malaxe le tout pendant 10 minutes, comme indiqué pour l'essai A précédent. On obtient ainsi une solution très visqueuse (solution S2), fortement anisotrope, contenant 25 % en poids de cellulose. On fait la même remarque que précédemment quant à la capacité de la solution à donner des fils.

### III.3. Essai C

Cet essai décrit trois exemples conformes à l'invention dans lesquels on prépare trois solutions de cellulose contenant respectivement 16 % (solution S3), 20 % (solution S4), et 30 % (solution S5) en poids de cellulose. L'agent solvant est constitué uniquement d'acide pyrophosphorique. Les trois solutions sont préparées comme indiquées précédemment pour les essais A et B, en malaxant les quantités souhaitées de cellulose et d'agent solvant, pendant 10 minutes.
Le mélange obtenu dans les trois cas est une solution dont la viscosité croît avec la concentration en cellulose. Ces solutions sont cristal-liquide à température ambiante et au repos. Chacune d'entre elles à la capacité de donner des fils lorsqu'on en étire une goutte avec la pointe d'une spatule.

### III.4. Essai D

Cet essai décrit trois exemples conformes à l'invention dans lesquels on prépare trois solutions de cellulose contenant 20 % en poids de cellulose. L'agent solvant, à base d'acide pyrophosphorique, est préparé en mélangeant des proportions variables d'acide pyrophosphorique et d'eau, comme indiqué ci-après :

- pour la solution S6 : 96 % d'acide, 4 % d'eau ;
- pour la solution S7 : 91 % d'acide, 9 % d'eau ;
- pour ls solution S8 : 87 % d'acide, 13 % d'eau .

Les trois solutions sont ensuite préparées en mélangeant les quantités voulues de cellulose et d'agent solvant, pendant 1 heure, dans un petit réacteur de laboratoire de 0,5 litre équipé d'une double enveloppe (refroidie à -5°C) et d'un agitateur mécanique. Les mélanges ainsi obtenus sont bien dans les trois cas une solution cristal-liquide à température ambiante et au repos. L'analyse du DP de la cellulose dans la solution donne par ailleurs les résultats suivants : 395 (S6); 400 (S7); 400 (S8). Ces solutions sont aptes à donner des fils.

### III.5. Essai E

Cet essai décrit trois exemples non conformes à l'invention dans lesquels on prépare trois solutions (S9, S10, et S11) contenant 9 % en poids de cellulose. L'agent solvant est formé par mélange d'acide polyphosphorique et d'eau, selon les proportions suivantes :

- pour la solution S9 : 84 % d'acide, 16 % d'eau;
- pour la solution S10: 80 % d'acide, 20 % d'eau;
- pour la solution S11: 78 % d'acide, 22 % d'eau.

Le procédé employé est donc non conforme à l'invention.
Le mélange cellulose et agent solvant est malaxé pendant 1 heure dans un petit réacteur de laboratoire, comme indiqué dans l'essai D précédent. Les mélanges ainsi obtenus sont bien des solutions. Mais aucune de ces trois solutions ne présente d'anisotropie optique à température ambiante et au repos.

### III.6. Essai F

Cet essai décrit un exemple non conforme à l'invention dans lequel on essaie de préparer une solution (S12) contenant 18 % en poids de cellulose. L'agent solvant est un mélange d'acide polyphosphorique (82 % en poids de mélange) et d'eau (18 % en poids de mélange). Le procédé utilisé est donc non conforme à l'invention.
L'ensemble est mélangé comme indiqué dans l'essai D précédent. Au bout de 2 heures, la cellulose n'est toujours pas dissoute. Aucune solution conforme à l'invention n'est obtenue, même en prolongeant la durée de malaxage.

### III.7. Essai G

Cet essai décrit trois exemples conformes à l'invention dans lesquels on prépare trois solutions de cellulose contenant 12 % (S13), 16 % (S14), et 22 % (S15) en poids de cellulose. L'agent solvant, à base d'acide polyphosphorique et d'eau, est préparé en mélangeant des proportions variables d'acide et d'eau, comme indiqué ci-après :

- pour la solution S13: 91 % d'acide, 9 % d'eau ;
- pour la solution S14: 95 % d'acide, 5 % d'eau ;
- pour la solution S15: 87 % d'acide, 13 % d'eau .

Les quantités souhaitées de cellulose et d'agent solvant sont mélangées pendant 1 heure dans un petit réacteur de laboratoire, comme indiqué dans l'essai D précédent. Trois solutions sont ainsi obtenues après un malaxage de 1 heure. Elles sont toutes trois cristal-liquide à température ambiante et au repos, et également aptes à donner des fils.

III.8. Essai H

Cet essai décrit un exemple conforme à l'invention dans lequel on prépare 1500 g de solution (solution S 16) contenant 21 % en poids de cellulose. La solution est réalisée dans un mélangeur de 2 litres comportant des bras de malaxage en forme de Z, et équipé d'une double enveloppe pour refroidissement.

1035 g d'acide polyphosphorique (87 % en poids de mélange) et 150 g d'eau (13 % en poids de mélange) sont préalablement mélangés, sous refroidissement (+5°C), dans un réacteur à double enveloppe. L'agent solvant ainsi obtenu est ensuite introduit dans le mélangeur à bras Z de 2 litres. On ajoute ensuite 315 g de cellulose et on mélange le tout pendant 1 heure en maintenant la température du mélange à une valeur au plus égale à 18°C (double enveloppe refroidie à -10°C environ).

On obtient ainsi 1,5 kg de solution de cellulose (DP égal à 420 environ), montrant une forte anisotropie à température ambiante et au repos. Cette solution est apte à donner des fils.

III.9. Essai I

Cet essai décrit un exemple de solution conforme à l'invention. Dans cet essai, on prépare plus de 26 kg de solution (solution S17) contenant 22 % en poids de cellulose. Cette solution conforme à l'invention, filable, est ensuite mise en oeuvre pour donner des fibres de cellulose (exemples I-1 et I-2).

18200 g d'acide polyphosphorique (87 % en poids de mélange) et 2675 g d'eau (13 % en poids de mélange) sont préalablement mélangés pour obtenir l'agent solvant, comme indiqué dans l'essai H précédent. L'agent solvant est ensuite introduit dans un mélangeur de 25 litres, à double enveloppe (refroidie à 0°C), comportant également des bras de malaxage en forme de Z. On ajoute ensuite 5890 g de cellulose, et on mélange le tout pendant 1 heure, sous un vide de 8 mbar afin de dégazer la solution, ceci tout en maintenant la température du mélange à une valeur au plus égale à 17°C (double enveloppe refroidie à -20°C environ).

La solution, maintenue sous vide, est ensuite extrudée vers l'installation de filage. La solution obtenue est cristal-liquide à température ambiante et au repos. Le DP de la cellulose dans la solution est de 420 environ.

Cette solution est filée comme indiqué au paragraphe II.4., à travers une filière contenant 250 capillaires de diamètre 65 micromètres, selon la technique dite de "filage avec couche non coagulante" (dry-jet-wet spinning) et une épaisseur de la couche d'air de 45 mm. Les conditions particulières du filage sont indiquées ci-après.

Exemple I-1 : La température de filage est égale à 39°C. La vitesse de filière est de 5,5 m/min, et la vitesse de filage de 50 m/min, ce qui correspond à un FEF de 9,1. Le milieu coagulant employé dans cet essai est de l'acétone à -20°C. Après lavage à l'eau (température de 10°C), la fibre est séchée à une température de 90°C.

On obtient ainsi une fibre de cellulose, constituée de 250 filaments élémentaires, dont les propriétés mécaniques sont les suivantes:

- titre: 37 tex ;
- ténacité: 97 cN/tex ;
- module initial: 2950 cN/tex ;
- allongement à la rupture: 4,4 % .

Exemple I-2: A partir de la même solution, on réalise des fibres de cellulose en procédant comme pour l'exemple I-1 précédent, exception faite de la vitesse de filière égale à 5,3 m/min, de la vitesse de filage égale à 40 m/min (FEF égal à 7,6), et de la température de l'acétone (-16°C).

Les propriétés mécaniques de la fibre de cellulose sont les suivantes:

- titre: 44 tex ;
- ténacité: 99 cN/tex ;
- module initial: 2960 cN/tex ;
- allongement à la rupture: 4,6 % .

En conclusion, l'invention permet donc d'obtenir des solutions cristal-liquide de cellulose par dissolution directe de cette cellulose. Ceci est réalisé à l'aide d'un système solvant très simple, et dans des temps particulièrement courts, ce qui rend le procédé particulièrement attractif d'un point de vue industriel.

Sans étape de dérivation, et donc sans passer par des traitements de régénération, il est ainsi possible d'obtenir des fibres de cellulose à propriétés mécaniques très élevées, ces fibres étant des fibres non régénérées.

Bien entendu, l'invention n'est pas limitée aux exemples précédemment décrits.

De tels constituants, s'ils sont présents, le sont en proportion mineure, le total de leurs parties en poids dans la solution finale étant de préférence inférieur à 10 %, de manière encore plus préférentielle inférieur à 5 %.

A titre d'exemple, ces constituants supplémentaires pourraient être d'autres acides inorganiques, ou encore des sels, des solvants tels que des alcools, ou des plastifiants, d'autres polymères susceptibles de se dissoudre avec la cellulose, diverses charges ou additifs permettant par exemple d'accélérer la dissolution de la cellulose, ou d'améliorer la filabilité des solutions obtenues et/ou les propriétés des fibres filées à partir de ces solutions, par exemple leurs propriétés mécaniques, leurs propriétés d'endurance, ou leur adhésivité à une matrice de gomme.

**Revendications**

1. Solution cristal-liquide comportant de la cellulose dissoute dans un agent solvant, caractérisée par les points suivants:

   - elle contient plus de 10 % en poids de cellulose ;
   - elle est optiquement anisotrope à température ambiante et au repos ;
   - l'agent solvant contient plus de 85 % en poids d'au moins un acide phosphorique, cet acide phosphorique ou l'ensemble de ces acides phosphoriques répondant à la formule moyenne suivante:
     $[n(P_2O_5), p(H_2O)]$, avec: $0,33 < (n/p) < 1,0$.

2. Solution selon la revendication 1, caractérisée en ce qu'on a la relation :
   $0,5 \le (n/p) \le 0,75$.

3. Solution selon l'une quelconque des revendications 1 ou 2, caractérisée en ce que l'agent solvant est réalisé à partir de 0 jusqu'à moins de 15 % d'eau, et de plus de 85 % d'au moins un acide phosphorique (pourcentages en poids de l'agent solvant).

4. Solution selon la revendication 3, caractérisée en ce que l'agent solvant est réalisé uniquement à partir de 0 jusqu'à moins de 15 % d'eau, et de plus de 85 % d'au moins un acide phosphorique (pourcentages en poids de l'agent solvant).

5. Solution selon l'une quelconque des revendications 1 à 4, caractérisée en ce que l'acide phosphorique est l'acide pyrophosphorique ou un acide polyphosphorique.

6. Solution selon l'une quelconque des revendications 1 à 5, caractérisée en ce qu'elle contient plus de 15 % en poids de cellulose.

7. Solution selon l'une quelconque des revendications 1 à 6, caractérisée en ce qu'elle est une solution de filage.

8. Procédé pour obtenir une solution conforme à l'une quelconque des revendications 1 à 7, caractérisé par les points suivants:

   - on met la cellulose au contact d'un agent solvant qui contient plus de 85 % en poids d'au moins un acide phosphorique, cet acide phosphorique ou l'ensemble de ces acides phosphoriques répondant à la formule moyenne suivante:
     $[n(P_2O_5), p(H_2O)]$, avec: $0,33 < (n/p) < 1,0$ ;
   - on utilise une quantité de cellulose supérieure à 10 % en poids du mélange cellulose plus agent solvant ;
   - on dissout directement cette cellulose par malaxage avec l'agent solvant.

9. Procédé selon la revendication 8, caractérisé en ce qu'on a la relation :
   $0,5 \le (n/p) \le 0,75$ .

10. Procédé selon l'une quelconque des revendications 8 ou 9, caractérisé en ce que l'agent solvant est réalisé à partir de 0 jusqu'à moins de 15 % d'eau, et de plus de 85 % d'au moins un acide phosphorique (pourcentages en poids de l'agent solvant).

11. Procédé selon la revendication 10, caractérisé en ce que l'agent solvant est réalisé uniquement à partir de 0 jusqu'à moins de 15 % d'eau, et de plus de 85 % d'au moins un acide phosphorique (pourcentages en poids de l'agent solvant).

12. Procédé selon l'une quelconque des revendications 8 à 11, caractérisé en ce que l'acide phosphorique est l'acide pyrophosphorique ou un acide polyphosphorique.

13. Procédé selon l'une quelconque des revendications 8 à 12, caractérisé en ce qu'on utilise une quantité de cellulose supérieure à 15 % en poids du mélange cellulose plus agent solvant.

14. Procédé pour obtenir une fibre ou un film en cellulose, comportant les étapes suivantes :

    - on transforme la solution conforme à la revendication 7 en un extrudat liquide ayant la forme d'une fibre ou d'un film ;
    - on coagule ledit extrudat liquide dans un milieu coagulant ;
    - on lave, puis on sèche la fibre ou le film ainsi obtenus.

15. Procédé selon la revendication 14, caractérisé en ce que le milieu coagulant est à base d'alcool ou de cétone.

16. Procédé selon l'une quelconque des revendications 14 ou 15, caractérisé en ce qu'il est mis en oeuvre selon la technique de filage dite avec couche non coagulante ("dry-jet-wet spinning").

17. Fibre où film obtenus selon un procédé conforme à l'une quelconque des revendications 14 à 16.

18. Fibre de cellulose, caractérisée en ce qu'elle est non régénérée et en ce qu'elle vérifie au moins une des relations suivantes:

Te > 70;Mi > 1500, Te étant sa ténacité en cN/tex, et Mi étant son module initial en cN/tex.

19. Fibre selon la revendication 18, caractérisée en ce qu'elle vérifie au moins une des relations suivantes:

Te > 90 ; Mi > 2500.

20. Assemblage de renforcement comportant au moins une fibre et/ou un film selon la revendication 17 et/ou au moins une fibre selon l'une quelconque des revendications 18 ou 19.

21. Article renforcé par au moins une fibre et/ou un film selon la revendication 17 et/ou une fibre selon l'une quelconque des revendications 18 ou 19 et/ou par au moins un assemblage de renforcement selon la revendication 20.

22. Article selon la revendication 21, caractérisé en ce qu'il est une enveloppe de pneumatique.

**Patentansprüche**

1. Flüssigkristalline Lösung, die Cellulose enthält, die in einem Lösungsmittel gelöst ist, die durch die folgenden Punkte gekennzeichnet ist:

   - sie enthält mehr als 10 Gew.-% Cellulose;
   - sie ist bei Umgebungstemperatur und im Ruhezustand optisch anisotrop;
   - das Lösungsmittel enthält mehr als 85 Gew.-% mindestens einer Phosphorsäure, wobei diese Phosphorsäure oder dies Phosphorsäuren zusammen der folgenden mittleren Formel entsprechen:

     $[n(P_2O_5),p(H_2O)]$, mit: 0,33 < (n/p) < 1,0.

2. Lösung nach Anspruch 1, dadurch gekennzeichnet, daß die Beziehung:

   $0,5 \leq (n/p) \leq 0,75.$ erfüllt ist.

3. Lösung nach einem der Ansprüche 1 und 2, dadurch gekennzeichnet, daß das Lösungsmittel aus 0 bis weniger als 15 % Wasser und mehr als 85 % mindestens einer Phosphorsäure hergestellt wird (Gew.-%, bezogen auf das Lösungsmittel).

4. Lösung nach Anspruch 3, dadurch gekennzeichnet, daß das Lösungsmittel ausschließlich aus 0 bis weniger als 15 % Wasser und mehr als 85 % mindestens einer Phosphorsäure hergestellt wird (Gew.-%, bezogen auf das Lösungsmittel).

5. Lösung nach einem der Ansprüche 1 bis 4, dadurch gekennzeichnet, daß es sich bei der Phosphorsäure um die Pyrophosphorsäure oder eine Polyphosphorsäure handelt.

6. Lösung nach einem der Ansprüche 1 bis 5, dadurch gekennzeichnet, daß sie mehr als 15 Gew.-% Cellulose enthält.

7. Lösung nach einem der Ansprüche 1 bis 6, dadurch gekennzeichnet, daß sie eine Spinnlösung ist.

8. Verfahren zur Herstellung einer Lösung nach einem der Ansprüche 1 bis 7, das durch die folgenden Schritte gekennzeichnet ist:

   - Inkontaktbringen der Cellulose mit einem Lösungsmittel, das mehr als 85 Gew.-% mindestens einer Phosphorsäure enthält, wobei diese Phosphorsäure oder diese Phosphorsäuren zusammen der allgemeinen mittleren Formel

     $[n(P_2O_5),p(H_2O)]$, mit: 0,33 < (n/p) < 1,0 entsprechen,
   - Verwenden einer Menge an Cellulose, die größer als 10 Gew.-% des Gemischs aus Cellulose und Lösungsmittel ist,
   - unmittelbares Auflösen dieser Cellulose durch Mischen mit dem Lösungsmittel.

9. Verfahren nach Anspruch 8, dadurch gekennzeichnet, daß die Beziehung:

   $0,5 \leq (n/p) \leq 0,75.$ erfüllt ist.

10. Verfahren nach einem der Ansprüche 8 und 9, dadurch gekennzeichnet, daß das Lösungsmittel aus 0 bis weniger als 15 % Wasser und mehr als 85 % mindestens einer Phosphorsäure hergestellt wird (Gew.-%, bezogen auf das Lösungsmittel).

11. Verfahren nach Anspruch 10, dadurch gekennzeichnet, daß das Lösungsmittel ausschließlich aus 0 bis weniger als 15 % Wasser und mehr als 85 % mindestens einer Phosphorsäure hergestellt wird (Gew.-%, bezogen auf das Lösungsmittel).

12. Verfahren nach einem der Ansprüche 8 bis 11, dadurch gekennzeichnet, daß es sich bei der Phosphorsäure um die Pyrophosphorsäure oder eine Polyphosphorsäure handelt.

13. Verfahren nach einem der Ansprüche 8 bis 12, dadurch gekennzeichnet, daß die Cellulose in einer Menge von mehr als 15 Gew.-%, bezogen auf das Gemisch aus Cellulose und Lösungsmittel, verwendet wird.

14. Verfahren zur Herstellung einer Faser oder eines Films aus Cellulose, das die folgenden Schritte umfaßt:

   - Umwandlung der Lösung gemäß Anspruch 7 in ein flüssiges Extrudat, das die Form einer Faser oder eines Films aufweist,
- Koagulieren des flüssigen Extrudats in einem koagulierenden Medium,
- Waschen und anschließend Trocknen der so erhaltenen Faser oder des so erhaltenen Films.

15. Verfahren nach Anspruch 14, dadurch gekennzeichnet, daß das koagulierende Medium ein Medium auf Alkohol- oder Ketonbasis ist.

16. Verfahren nach einem der Ansprüche 14 und 15, dadurch gekennzeichnet, daß es unter Anwendung der als "Spinntechnik mit nicht-koagulierender Schicht" bezeichneten Technik ("dry-jet-wet spinning") durchgeführt wird.

17. Faser oder Film, die/der nach einem Verfahren nach einem der Ansprüche 14 bis 16 erhältlich ist.

18. Cellulosefaser, dadurch gekennzeichnet, daß sie nicht regeneriert ist und daß sie mindestens eine der folgenden Beziehungen
Te > 70 cN/tex; Mi > 1500 cN/tex erfüllt, worin Te die Bruchfestigkeit und Mi den anfangsbezogenen Modul dieser Cellulosefaser bedeutet.

19. Cellulosefaser nach Anspruch 18, dadurch gekennzeichnet, daß sie mindestens eine der folgenden Relationen
Te > 90 ; Mi > 2500. erfüllt.

20. Verbundmaterial für Verstärkungszwecke, die mindestens eine Faser oder einen Film nach Anspruch 17 und/oder mindestens eine Faser nach einem der Ansprüch 18 und 19 enthält.

21. Gegenstand, der mit mindestens einer Faser und/oder einem Film nach Anspruch 17 und/oder mindestens einer Faser nach einem der Ansprüch 18 und 19 und/oder mindestens einer Anordnung für Verstärkungszwecke nach Anspruch 20 verstärkt ist.

22. Gegenstand nach Anspruch 21, dadurch gekennzeichnet, daß es sich um einen Luftreifen handelt.

**Claims**

1. A liquid-crystal solution comprising cellulose dissolved in a solvent agent, characterised by the following points:

   - it contains more than 10% by weight cellulose;
   - it is optically anisotropic at ambient temperature and at rest;
   - the solvent agent contains more than 85% by weight of at least one phosphoric acid, this phosphoric acid or all these phosphoric acids having the following average formula:
     $[n(P_2O_5), p(H_2O)]$, with: $0.33 < (n/p) < 1.0$.

2. A solution according to claim 1, characterised by the relationship:
     $0.5 \leq (n/p) \leq 0.75$.

3. A solution according to any one of Claims 1 or 2, characterised in that the solvent agent is prepared from 0 to less than 15% water and more than 85% of at least one phosphoric acid (percentages by weight of the solvent agent).

4. A solution according to Claim 3, characterised in that the solvent agent is prepared solely from 0 to less than 15% water and more than 85% of at least one phosphoric acid (percentages by weight of the solvent agent).

5. A solution according to any one of Claims 1 to 4, characterised in that the phosphoric acid is pyrophosphoric acid or a polyphosphoric acid.

6. A solution according to any one of Claims 1 to 5, characterised in that it contains more than 15% by weight of cellulose.

7. A solution according to any one of Claims 1 to 6, characterised in that it is a spinning solution.

8. A process of obtaining a solution according to any one of Claims 1 to 7, characterised by the following features:

   - cellulose is placed in contact with a solvent agent which contains more than 85% by weight of at least one phosphoric acid, this phosphoric acid or all of these phosphoric acids having the following average formula:
     $[n(P_2O_5), p(H_2O)]$, with: $0,33 < (n/p) < 1.0$;
   - an amount of cellulose of more than 10% by weight of the mixture of cellulose plus solvent agent is used;
   - this cellulose is dissolved directly by kneading with the solvent agent.

9. A process according to Claim 8, characterised by the relationship:
     $0.5 \leq (n/p) \leq 0.75$.

10. A process according to any one of Claims 8 and 9, characterised in that the solvent agent is prepared from 0 to less than 15% water and more than 85% of at least one phosphoric acid (percentages by weight of the solvent agent).

**11.** A process according to Claim 10, characterised in that the solvent agent is prepared solely from 0 to less than 15% water and more than 85% of at least one phosphoric acid (percentages by weight of the solvent agent).

**12.** A process according to any one of Claims 8 to 11, characterised in that the phosphoric acid is pyrophosphoric acid or a polyphosphoric acid.

**13.** A process according to any one of Claims 8 to 12, characterised in that an amount of cellulose of more than 15% by weight of the mixture of cellulose plus solvent agent is used.

**14.** A process of obtaining a cellulose fibre or film comprising the following steps:

- the solution in accordance with Claim 7 is transformed into a liquid extrudate having the form of a fibre or a film;
- said liquid extrudate is coagulated in a coagulating medium;
- the fibre or film thus obtained is washed and dried.

**15.** A process according to Claim 14, characterised in that the coagulating medium has a base of alcohol or ketone.

**16.** A process according to any one of Claims 14 or 15, characterised in that it is used in accordance with the spinning technique known as spinning with non-coagulating layer ("dry-jet-wet spinning").

**17.** A fibre or film obtained by a process according to any one of Claims 14 to 16.

**18.** A cellulose fibre, characterised in that it is not regenerated and that it satisfies at least one of the following relationships:
Te > 70; Mi > 1500, Te being its tenacity in cN/tex and Mi being its initial modulus in cN/tex.

**19.** A fibre according to Claim 18, characterised in that it satisfies at least one of the following relationships:
Te > 90; Mi > 2500.

**20.** A reinforcing assembly comprising at least one fibre and/or one film according to Claim 17 and/or at least one fibre according to, any one of Claims 18 or 19.

**21.** An article reinforced by at least one fibre and/or film according to Claim 17 and/or a fibre according to any one of Claims 18 and 19 and/or by at least one reinforcing assembly according to Claim 20.

**22.** An article according to Claim 21, characterised in that it is a tyre.